(19) Europäisches Patentamt
European Patent Office
Office européen des brevets

(11) EP 0 499 528 B1

# (12) FASCICULE DE BREVET EUROPEEN

(45) Date de publication et mention de la délivrance du brevet:
**29.04.1998 Bulletin 1998/18**

(51) Int Cl.[6]: **C10M 107/38**, C10M 107/42, C10M 171/00, C09D 5/44, C25D 13/06 // C10N70/00

(21) Numéro de dépôt: **92400353.6**

(22) Date de dépôt: **11.02.1992**

## (54) Procédé de préparation d'une pièce métallique recouverte d'un film lubrifiant

Verfahren zur Herstellung eines mit einem Schmierfilm beschichteten Metallstückes

Process for the manufacture of a metallic article covered with a lubricating film

(84) Etats contractants désignés:
**BE DE GB IT NL**

(30) Priorité: **12.02.1991 FR 9101603**

(43) Date de publication de la demande:
**19.08.1992 Bulletin 1992/34**

(73) Titulaire: **COMMISSARIAT A L'ENERGIE ATOMIQUE**
**75015 Paris (FR)**

(72) Inventeurs:
- **Boyer, Lionel**
  **F-91120 Palaiseau (FR)**
- **Lecayon, Gérard**
  **F-91640 Briis/Forges (FR)**
- **Noel, Sophie**
  **F-75014 Paris (FR)**
- **Viel, Pascal**
  **F-92190 Meudon (FR)**

(74) Mandataire: **Des Termes, Monique et al**
**Société Brevatome**
**25, rue de Ponthieu**
**75008 Paris (FR)**

(56) Documents cités:
**EP-A- 0 038 244** **EP-A- 0 038 244**
**DD-A- 260 524** **DE-A- 2 140 850**
**DE-A- 3 806 014** **FR-A- 2 225 507**

- **WORLD PATENTS INDEX Week 8030, Derwent Publications Ltd., London, GB; AN 80- 52494 [30]**
- **PATENT ABSTRACTS OF JAPAN vol. 12, no. 120 (M-685)(2967) 14 Avril 1988**
- **WORLD PATENTS INDEX LATEST Week 8649, Derwent Publications Ltd., London, GB; AN 86-322993 [49]**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet un procédé de fabrication d'une pièce métallique recouverte d'un film lubrifiant.

De façon plus précise, elle concerne une pièce métallique ayant des propriétés améliorées de résistance au frottement grâce à la présence d'un film lubrifiant solide.

De nombreux domaines technologiques mettent en jeu des mécanismes complexes dans lesquels les mouvements entre pièces mobiles posent des problèmes de lubrification qui restent souvent sans solution satisfaisante. Ces domaines intéressent aussi bien l'informatique (contact entre disque dur et tête de lecture), que l'industrie spatiale (mécanisme de pointage, déploiement des antennes), les dispositifs sous ultravide (calibrage des faisceaux par diaphragme, mécanisme de déplacement) et les appareillages médicaux (prothèse implantée au niveau des articulations). Dans tous ces domaines, le film lubrifiant utilisé pour réduire la friction entre les pièces en mouvement doit présenter certaines caractéristiques que l'on peut résumer de la façon suivante :

- le film lubrifiant doit avoir une épaisseur très faible de façon à ne pas perturber le principe de fonctionnement des dispositifs ; ainsi, dans le domaine de l'informatique l'épaisseur à ne pas dépasser peut être aussi faible que 10nm ;
- la présence du film lubrifiant ne doit pas entraîner une pollution des mécanismes ou de l'environnement, par exemple en raison d'une tension de vapeur trop élevée, de phénomènes de dégazage ou d'écoulements de liquide ;
- la stabilité du lubrifiant doit être élevée pour assurer le maintien des performances de frottement et limiter le développement de phénomènes de pollution par formation de sous-produits de dégradation, pendant une durée compatible avec les périodes pendant lesquelles il est impossible d'intervenir sur les pièces en mouvement ;
- la résistance du lubrifiant vis-à-vis d'environnements agressifs doit être également très élevée.

Pour répondre à ces exigences, notamment à la faible épaisseur requise, on a envisagé l'utilisation de couches monomoléculaires de composés du type silane, comme il est décrit dans Thin Solid Films, 180, 1989, p. 287-291. Cependant, l'utilisation de couches de Langmuir de ce type ne permet pas de répondre à tous les problèmes, car leur utilisation est limitée quant à la nature des substrats métalliques utilisables pour le dépôt de telles couches ; par ailleurs, d'autres problèmes se posent en ce qui concerne la tenue sous vide ou en présence d'environnements agressifs de couches monomoléculaires de ce type.

La présente invention a précisément pour objet la préparation d'une pièce métallique recouverte d'un film de lubrifiant solide qui peut présenter une épaisseur aussi mince que celle de couches de Langmuir, mais qui possède des propriétés plus intéressantes de tenue sous vide ou en présence d'environnements agressifs, et qui peut être utilisée sur de nombreux substrats métalliques, notamment sur des pièces de forme compliquée, difficiles à recouvrir de lubrifiant.

Selon l'invention, le procédé de préparation d'une pièce métallique recouverte d'un film lubrifiant, consiste à déposer par électropolymérisation en milieu aprotique anhydre sur la surface de la pièce un film de polymère ayant une épaisseur de 1 à 1000nm, en appliquant sur la pièce une polarisation cathodique de façon séquencée.

Selon l'invention, le film lubrifiant est un film de polymère homogène et adhérent, ayant une épaisseur de 1nm à 1000nm, de préférence de 2 à 500nm.

Le polymère peut être un polymère fluoré présentant naturellement des propriétés réductrices de frottement intéressantes, par exemple un polymère fluoré obtenu à partir de monomères substitués par des groupements fonctionnels fluorés ou de noyaux aromatiques fluorés.

A titre d'exemples de tels polymères, on peut citer le polypentafluorostyrène de formule :

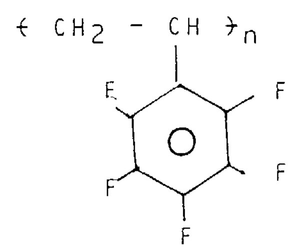

Les polyesters perfluorés, c'est-à-dire renfermant dans leur squelette des groupements perfluorés du type :

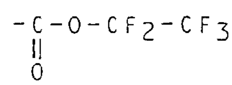

et les polyesters fluorés renfermant par exemple dans leur squelette des groupements fluorés du type :

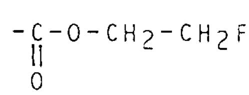

Le polymère fluoré peut être également un copolymère obtenu à partir d'un monomère perfluoré ou fluoré et d'un autre monomère non fluoré.

Le polymère peut être aussi un polymère non fluoré, par exemple de polyacrylonitrile, présentant des propriétés lubrifiantes résultant du mode de synthèse approprié du polymère par électropolymérisation sous polarisation cathodique séquencée.

L'utilisation du procédé de dépôt du film lubrifiant de l'invention est très intéressante, car elle permet de contrôler l'épaisseur du film en jouant sur la durée de l'électropolymérisation, la concentration en monomère et le niveau de la polarisation imposée à l'électrode.

De plus, le fait de réaliser l'électropolymérisation en milieu anhydre avec de fortes concentrations en monomère permet d'obtenir des films présentant des caractéristiques d'adhérence et de compacité beaucoup plus élevées.

En effet, lorsque l'on prépare des films par électropolymérisation en milieu aqueux comme il est décrit dans DE-A-3 806 014, le film de polymère est formé par voie radicalaire à partir des radicaux libres H· formés électrochimiquement dans la solution aqueuse acide renfermant le monomère par polarisation cathodique. De ce fait, le film présente inévitablement des hétérogénéités structurales (aspect spongieux) qui résultent du dégagement gazeux d'hydrogène correspondant à la recombinaison des radicaux libres n'ayant pas réagi avec le monomère. D'autre part, le mécanisme radicalaire implique la fixation du radical sur l'extrémité de la molécule de monomère, ce qui hypothèque les possibilités de chimisorption sur la surface de l'électrode, celle-ci étant également inhibée par la création à l'aplomb des sites réactifs superficiels des radicaux hydrogène naissant formés par réduction des protons de la solution.

Conformément à l'invention, on utilise un procédé dans lequel le film de polymère électropolymérisé est formé à la suite d'une interaction directe entre le monomère et la surface de l'électrode et les aspects originaux de ce procécé portent sur la mise en oeuvre des conditions expérimentales de synthèse, notamment en ce qui concerne la purification du milieu réactionnel, les rapports de concentration monomère/sel de fond, et la nature du solvant.

Ainsi, on favorise le développement de mécanismes de polymérisation ionique (anionique sous polarisation cathodique, cationique sous polarisation anodique) dans lesquels interagissent de façon directe les radicaux ions et les molécules de monomère par des processus du type donneur-accepteur. De plus, le caractère aprotique anhydre du milieu réactionnel et l'emploi de concentrations élevées en monomère permet de privilégier le développement d'une réaction secondaire d'électrode qui correspond au greffage chimique des premières chaînes de polymère sur la surface du métal de l'électrode. Les chaînes ainsi greffées font ensuite fonction de film précurseur assurant l'ancrage de l'électropolymère formé à l'interface et la croissance de films épais, homogènes et adhérents dont l'épaisseur peut aller jusqu'à 1 µm.

Ainsi, on a pu obtenir des énergies d'adhésion d'un film de polymère de 100 nm (en polyacrylonitrile) sur un substrat métallique (fer ou nickel) supérieures à 500 joules/$m^2$.

De même, des mesures d'impédance électrochimique dans l'eau, en présence de $LiClO_4$ 1M, ont mis en évidence le caractère compact des films, le coefficient de diffusion mesuré pour l'ion lithium étant de $10^{-12}$ $cm^2$ $s^{-1}$ dans un film de polyacrylonitrile de 100 nm conforme à l'invention alors qu'il est de $10^{-10}$ $cm^2s^{-1}$, soit 100 fois plus faible, dans le cas d'un film de polyacrylonitrile de 100 nm obtenu par voie radicalaire et déposé au trempé.

La compacité des films de l'invention explique le caractère couvrant de ces films qui donnent une homogénéité de couverture à partir d'une épaisseur de 1 nm et ceci quelle que soit la rugosité du substrat, car le film épouse intimement les accidents superficiels. Cette homogénéité de couverture confère au film un rôle protecteur très élevé.

Par ailleurs, le film de polymère déposé présente une morphologie homogène et une structure moléculaire définie qui peut être pilotée à partir du choix des paramètres de la synthèse électrochimique, c'est-à-dire de la concentration en monomère de la solution utilisée pour l'électropolymérisation et du mode d'application de la tension. Dans ce procédé, la pièce métallique à recouvrir joue le rôle de cathode et elle est immergée dans une solution du monomère dans un solvant organique approprié contenant un électrolyte support, par exemple du perchlorate de tétraéthylammonium. Le solvant utilisé peut être l'acétonitrile ou un autre solvant aprotique dipolaire dans lequel le polymère formé est insoluble et la concentration en monomère de la solution est généralement dans la gamme allant de $10^{-1}$mol/l à 10 mol/l. Dans certains cas, on peut utiliser le monomère sans solvant lorsque celui-ci est liquide à la température ambiante. Pour réaliser l'électropolymérisation, on applique une polarisation cathodique de façon séquencée sur la surface de la pièce à recouvrir et la tension appliquée dépend en particulier du monomère à polyréaliser.

Ce mode d'application de la tension à la cathode permet d'obtenir un film de polymère ayant un squelette moins segmenté que lorsque l'on applique la tension à la cathode de façon continue. Cette diminution importante de segmentation du polymère qui correspond à la formation de chaînes plus longues, conduit à une meilleure cohésion du squelette, favorable à l'obtention des propriétés lubrifiantes.

Dans ce procédé, la pièce métallique à recouvrir joue le rôle de cathode et elle est immergée dans une solution du monomère dans un solvant organique approprié contenant un électrolyte-support, par exemple du perchlorate de tétraéthylammonium.

Le solvant utilisé peut être également l'acétonitrile ou un autre solvant aprotique dipolaire dans lequel le polymère formé est insoluble. Dans le cas où le monomère est l'acrylonitrile, la concentration en monomère de la solution est généralement dans la gamme allant de 2,5 à 10 mol/l et la tension appliquée peut être de -2,4 à -2,6V par rapport à une électrode $Ag/Ag^+$. La durée des séquences peut être de 20 à 100ms. En effectuant 10 à 100 séquences, on peut obtenir des films de polymère ayant une épaisseur de 10 à 500nm.

Selon l'invention, on peut soumettre de plus le film déposé à un traitement thermique ou à une irradiation pour améliorer ses propriétés de résistance au frottement.

Le polymère modifié par ce traitement thermique ou cette irradiation comporte des structures cycliques présentant de bonnes propriétés réductrices de frottement.

A titre d'exemples de tels polymères susceptibles d'être modifiés de cette façon, on peut citer les polymères comportant des groupes nitrile comme le polyacrylonitrile qui, par traitement thermique ou par irradiation, perdent en partie leurs groupes nitrile pour former des structures cycliques qui donnent au polymère de bonnes propriétés de résistance au frottement.

La température, la durée et l'atmosphère utilisées pour le traitement thermique dépendent en particulier du polymère déposé. Lorsque le polymère est du polyacrylonitrile, on peut utiliser une température de 200 à 600°C et réaliser le traitement thermique pendant une durée allant de 1 h à 24 h.

Lorsque le traitement consiste en une irradiation, on peut utiliser pour cette irradiation des rayonnements ultraviolets ou encore le faisceau blanc du rayonnement synchrotron.

On précise que le faisceau blanc du rayonnement synchrotron correspond au faisceau issu du synchrotron avant monochromatisation. C'est un faisceau analogue au visible qui est enrichi en rayonnement UV et en rayons X mous.

Dans le cas de l'irradiation, on choisit les conditions d'irradiation, en particulier la durée et l'atmosphère, en fonction du polymère traité pour obtenir les propriétés souhaitées.

Le dépôt du film de polymère par électropolymérisation peut être réalisé dans les mêmes conditions que précédemment. On peut en particulier utiliser le procédé de dépôt par électropolymérisation décrit dans le document EP-A-0 038 244.

Les pièces métalliques utilisées dans l'invention peuvent être réalisées en différents types de métaux, en particulier en métaux oxydables comme le fer, le nickel, le cuivre, le chrome, le cobalt et leurs alliages, par exemple les laitons et les aciers inoxydables.

D'autres caractéristiques et avantages de l'invention apparaîtront mieux à la lecture des exemples suivants donnés bien entendu à titre illustratif et non limitatif en référence au dessin annexé sur lequel :

- les figures 1 à 3 sont des spectres infrarouges illustrant la structure moléculaire de films de polyacrylonitrile obtenus par électropolymérisation (figure 1), puis après six mois de vieillissement en atmosphère de laboratoire (figure 2) et après 17 jours de vieillissement en chaleur humide (figure 3),
- la figure 4 est un diagramme représentant l'application d'une polarisation cathodique séquencée,
- les figures 5 et 6 sont des spectres infrarouges illustrant la structure moléculaire de films de polyacrylonitrile obtenus par électropolymérisation séquencée (figure 5), et par électropolymérisation continue (figure 6),
- la figure 7 représente schématiquement un mode de réalisation d'un test de mesure du coefficient de frottement,
- les figures 8, 9, 10 et 11 sont des diagrammes représentant l'évolution du coefficient de frottement de différents matériaux en fonction du nombre de cycles réalisés.
- la figure 12 représente les spectres Auger d'un substrat en nickel (A) et du substrat revêtu d'un film de polyacrylonitrile (B).

**EXEMPLE 1 :**

Cet exemple illustre la réalisation de films de polyacrylonitrile sur une pièce en nickel. Pour réaliser le dépôt du film, on immerge la pièce à protéger dans une solution contenant 2,5 mol/l d'acrylonitrile et $5.10^{-2}$ mol/l de perchlorate de tétraéthylammonium dans de l'acétonitrile, puis on applique sur la pièce une tension de -2,4 Volts par rapport à une électrode $Ag/Ag^{+}$ en réalisant 20 séquences consécutives de 25 ms pour former sur la surface de la pièce un film de 50nm d'épaisseur.

Sur la figure 1, on a représenté le spectre infrarouge du film ainsi obtenu.

**EXEMPLE 2 :**

On évalue la résistance au vieillissement du film préparé dans l'Exemple 1 en l'exposant pendant six mois à l'atmosphère du laboratoire. Après ces six mois, on détermine le spectre infrarouge du film.

Ce spectre qui est représenté sur la figure 2 est sensiblement identique au spectre de la figure 1, c'est-à-dire à celui du film de départ, car il n'y a pas de changement très significatif.

**EXEMPLE 3 :**

Dans cet exemple, on soumet un film de polyacrylonitrile obtenu dans les mêmes conditions que celui de l'exemple 1 à un vieillissement à 70°C, pendant 17 jours, dans une atmosphère dont l'humidité relative est de 80 %.

La figure 3 représente le spectre infrarouge du film après ce traitement de vieillissement.

En comparant ce spectre avec celui de la figure 1, on constate qu'il n'y a pas non plus de changement significatif. Ainsi le film de polyacrylonitrile possède une bonne résistance au vieillissement dans des atmosphères variées.

**EXEMPLE 4 :**

Dans cet exemple, on soumet un film de polyacrylonitrile de 30nm d'épaisseur déposé sur une plaque de

nickel par électropolymérisation comme dans l'Exemple 1, à un traitement thermique à 200°C pendant 24 heures, à l'air, pour améliorer ses propriétés de résistance au frottement.

**EXEMPLE 5 :**

Dans cet exemple, on soumet à un traitement d'irradiation au moyen de rayonnements ultraviolets pendant 8 minutes sous argon un film de polyacrylonitrile déposé sur du nickel obtenu dans les mêmes conditions que le film de l'Exemple 4.

**EXEMPLE 6 :**

Dans cet exemple, on dépose par électropolymérisation comme dans l'exemple 1, un film de polyacrylonitrile sur une pièce en nickel, en appliquant également sur la pièce une tension de -2,4 V par rapport à une électrode Ag/$Ag^+$ mais en réalisant 40 séquences d'une durée de 100ms.

Sur la figure 4, on a représenté l'évolution de la tension et de l'intensité de courant qui traverse la cellule en fonction du temps (en ms).

Sur cette figure, la courbe V (en pointillés) illustre le mode d'application de la polarisation cathodique et la courbe I formée d'une ligne continue et de tirets illustre le mode de variation de l'intensité du courant qui traverse la cellule ; la ligne continue représente la réponse en courant pendant l'imposition de la tension tandis que la courbe en tirets représente le retour à l'équilibre du courant pendant le temps de relaxation.

Sur cette figure, on voit que pendant la première séquence de 100ms, on part du potentiel d'équilibre de la cellule et on applique la tension voulue de -2,4 V, puis on revient au potentiel d'équilibre de la cellule pendant 100 ms et on répète ces opérations le nombre de fois voulu. L'intensité du courant (courbe I) pendant ces séquences varie également, mais le profil de la courbe se modifie au cours des séquences suivantes.

La figure 5 représente le spectre infrarouge du film obtenu après 40 séquences de 100ms, qui présente une épaisseur de 100nm.

**EXEMPLE 7 :**

Dans cet exemple, on suit le même mode opératoire que dans l'exemple 6, pour déposer sur une pièce en nickel un film de polyacrylonitrile de 40nm d'épaisseur en utilisant 20 séquences de 20ms

**EXEMPLE COMPARATIF 1** :

Dans cet exemple, on dépose sur une pièce en nickel un film de polyacrylonitrile par électropolymérisation mais en appliquant une tension continue. Dans ce cas, on immerge la pièce dans une solution contenant 0,5 mol/l d'acrylonitrile et $5.10^{-2}$ mol/l de perchlorate de tétraéthylammonium dans de l'acétonitrile, puis on applique sur la pièce une tension de -2,8 V par rapport à une électrode Ag/$Ag^+$ pendant une seconde pour former sur la surface de la pièce un film de 100 nm d'épaisseur.

Sur la figure 6, on a représenté le spectre infrarouge du film ainsi obtenu.

En comparant les figures 5 et 6, on remarque que la bande à 1426 $cm^{-1}$ qui est présente sur le spectre de la figure 6 et correspond à la présence dans le squelette du polymère de structure de type

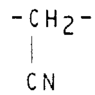

traduisant le développement de phénomènes de segmentation, n'apparaît pas sur le spectre de la figure 5.

Ainsi, grâce à l'application séquencée de la polarisation cathodique, on supprime le développement des phénomènes de segmentation, qui entraînent une fragilisation du polymère due à la présence de chaîne courte.

**EXEMPLE 8** :

On teste les propriétés de frottement des pièces revêtues d'un film de polyacrylonitrile obtenus dans les exemples 1, 4 et 5. Dans ce but, on utilise la méthode sphère/plan dont le schéma de principe est représenté sur la figure 7.

Sur cette figure, on voit la pièce 1 dont on veut mesurer le coefficient de frottement qui est composée d'une plaque de nickel 3 et du film lubrifiant 5 en polyacrylonitrile. Sur la surface de cette pièce, on appuie une bille sphérique 7 dorée rugueuse avec une force d'appui $F_N$. Le coefficient de frottement $\mu$ est défini par la formule suivante :

$$\mu = F_T / F_N$$

dans laquelle $F_N$ représente la force d'appui de la bille sphérique 7 sur le film lubrifiant 5 et $F_T$ est la force tangentielle le nécessaire pour déplacer la plaque revêtue par le film par rapport à la bille sphérique 7, la longueur de la piste de frottement étant de 1 mm et la vitesse de déplacement du plan étant de l'ordre de 0,1 mm/sec. Ainsi, la surface de contact entre la bille et le film a un diamètre de l'ordre de 70 µm en estimant celle-ci par un calcul de Hertz. Dans ces essais, on applique sur la bille sphérique qui a un diamètre de 2,8 mm une force $F_N$ de 0,8 Newton et on détermine $F_T$ et $\mu$.

Sur la figure 8, on a représenté l'évolution du coefficient de frottement $\mu$ en fonction du nombre de cycles de mesure réalisés.

Sur cette figure, la courbe 1 se réfère au film de polyacrylonitrile de l'Exemple 1, la courbe 2 se réfère au

film de polyacrylonitrile traité thermiquement de l'Exemple 4 et la courbe 3 se réfère au film de polyacrylonitrile traité par irradiation UV de l'exemple 5.

La courbe 4 représente à titre comparatif l'évolution du coefficient de frottement moyen dans le cas d'une pièce en laiton recouverte de nickel ne comportant pas de film lubrifiant de polyacrylonitrile.

Au vu de ces courbes, on constate que la présence d'un film de polyacrylonitrile brut d'électropolymérisation (courbe 1) permet d'obtenir au départ un coefficient de frottement (0,15 à 0,25) inférieur à celui (0,37) mesuré lors du frottement métal/métal. Cependant, à partir de 15 cycles, le film se dégrade et la valeur du coefficient de frottement évolue pour atteindre celle correspondant au frottement métal/métal (courbe 1).

Dans le cas d'un film traité thermiquement (courbe 2), le coefficient de frottement atteint une valeur de 0,15 après 5 cycles, mais il reste stable pendant 40 cycles.

Dans le cas du film traité sous rayonnement ultraviolet (courbe 3) le coefficient de frottement se stabilise à une valeur intermédiaire (0,25) qui reste stable pendant 20 cycles.

Ainsi, la réalisation d'un traitement thermique ou d'une irradiation au moyen de rayonnements ultraviolets permet d'améliorer les propriétés de frottement du film de polyacrylonitrile.

**EXEMPLE 9** :

Dans cet exemple, on teste les propriétés de frottement des films lubrifiants des exemples 6 et 7, mais en utilisant une bille sphérique de nickel poli au lieu de la bille dorée utilisée dans l'exemple 8 et en appliquant sur cette bille sphérique une force de 1,2N.

Les résultats obtenus dans ces conditions avec une pièce en nickel comportant un film de polyacrylonitrile brut d'électropolymérisation, ayant une épaisseur de 40nm (Exemple 7) sont représentés sur la figure 9 qui illustre l'évolution du coefficient de frottement $\mu$ en fonction du nombre de cycles.

Sur la figure 10, on a représenté les résultats obtenus dans les mêmes conditions avec le film de polyacrylonitrile brut d'électropolymérisation ayant une épaisseur de 100nm de l'exemple 6.

Sur la figure 11, on a représenté à titre comparatif les résultats obtenus lorsqu'on utilise une pièce en nickel ne comportant pas de film lubrifiant de polyacrylonitrile.

Au vu des figures 9 et 10, on constate qu'avec un film de polyacrylonitrile, le coefficient de frottement reste stable sur un nombre de cycles très important : 45 pour le film de 40nm et 115 pour celui de 100nm, ce qui montre l'intérêt du procédé de l'invention, puisqu'on diminue encore le coefficient de frottement en effectuant un traitement thermique ou une irradiation au moyen de rayonnements ultraviolets.

En revanche, en l'absence de film lubrifiant, le coefficient de frottement est beaucoup plus élevé comme on peut le voir sur la figure 11.

**EXEMPLE 10**

Dans cet exemple, on suit le même mode opératoire que dans l'Exemple 6 pour déposer par électropolymérisation un film de polyacrylonitrile de 20 nm d'épaisseur sur une pièce en nickel.

Avec cette épaisseur très faible, on obtient un taux de couverture complet du substrat en nickel comme on peut le voir sur la figure 12 qui représente les spectres Auger obtenus avant électropolymérisation (spectre A) et après polymérisation (spectre B).

Ainsi, on remarque que le spectre B ne comporte aucun élément étranger au polymère, ce qui traduit une grande pureté chimique. Par ailleurs, l'absence des raies du substrat en nickel traduit un taux de couverture complet.

## Revendications

1. Procédé de préparation d'une pièce métallique recouverte d'un film lubrifiant, caractérisé en ce qu'il consiste à déposer par électropolymérisation en milieu aprotique anhydre sur la surface de la pièce un film de polymère ayant une épaisseur de 1 à 1000nm, en appliquant sur la pièce une polarisation cathodique de façon séquencée.

2. Procédé selon la revendication 1, caractérisé en ce que l'on soumet de plus le film ainsi déposé à un traitement thermique pour améliorer ses propriétés de résistance au frottement.

3. Procédé selon la revendication 1, caractérisé en ce que le polymère est le polyacrylonitrile et en ce que le traitement thermique est effectué à une température de 200 à 600°C.

4. Procédé selon la revendication 1, caractérisé en ce que l'on soumet de plus le film à une irradiation pour améliorer ses propriétés de résistance au frottement.

5. Procédé selon la revendication 4 caractérisé en ce que l'on réalise l'irradiation au moyen de rayonnements ultraviolets pendant une durée de 8 min à 30 min.

6. Procédé selon l'une quelconque des revendications 1 à 5, caractérisé en ce que la durée de chaque séquence est de 20 à 100ms.

7. Procédé selon l'une quelconque des revendications 1, 2 et 4, caractérisé en ce que le polymère est le polyacrylonitrile.

**Patentansprüche**

1. Verfahren zur Herstellung eines mit einem Schmierfilm beschichteten Metallstückes,
**dadurch gekennzeichnet,**
daß es darin besteht, durch Elektropolymerisation in einem wasserfreien aprotischen Milieu auf der Oberfläche des Stücks einen Polymerfilm von 1 bis 1000nm abzuscheiden, indem man das Stück einer ablauf- bzw. folgegesteuerten Kathodenpolarisierung unterzieht.

2. Verfahren nach Anspruch 1, dadurch gekennzeichnet, daß man den derart abgeschiedenen Film zudem einer Wärmebehandlung unterzieht, um seine Reibfestigkeitseigenschaften zu verbessern.

3. Verfahren nach Anspruch 1, dadurch gekennzeichnet, daß das Polymer das Polyacrylnitril ist, und dadurch, daß die Wärmebehandlung bei einer Temperatur von 200 bis 600°C erfolgt.

4. Verfahren nach Anspruch 1, dadurch gekennzeichnet, daß man den Film zudem einer Bestrahlung unterzieht, um seine Reibfestigkeitseigenschaften zu verbessern.

5. Verfahren nach Anspruch 4, dadurch gekennzeichnet, daß man die Bestrahlung während einer Dauer von 8 bis 30 Minuten mit Ultraviolettstrahlungen durchführt.

6. Verfahren nach einem der Ansprüche 1 bis 5, dadurch gekennzeichnet, daß die Dauer jeder Folge 20 bis 100ms beträgt.

7. Verfahren nach einem der Ansprüche 1, 2 und 4, dadurch gekennzeichnet, daß das Polymer das Polyacrylnitril ist.

**Claims**

1. Process for the manufacture of a metal component covered with a lubricating film, characterized in that it consists in depositing a polymer film having a thickness of from 1 to 1000 nm by electropolymerization in an anhydrous aprotic medium on the surface of the component, applying a cathodic polarization to the component in a sequenced fashion.

2. Process according to Claim 1, characterized in that the film thus deposited is also subjected to a heat treatment in order to improve its friction-resistant properties.

3. Process according to Claim 1, characterized in that the polymer is polyacrylonitrile and in that the heat treatment is carried out at a temperature of from 200 to 600°C.

4. Process according to Claim 1, characterized in that the film is also subjected to irradiation in order to improve its friction-resistant properties.

5. Process according to Claim 4, characterized in that the irradiation is carried out by means of ultraviolet radiation for a period of from 8 min to 30 min.

6. Process according to any one of Claims 1 to 5, characterized in that the period of each sequence is from 20 to 100 ms.

7. Process according to any one of Claims 1, 2 and 4, characterized in that the polymer is polyacrylonitrile.

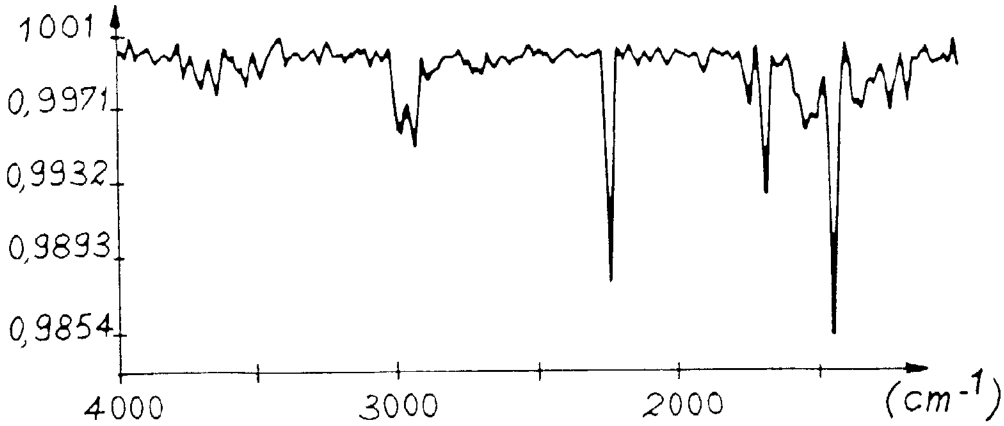


FIG. 1

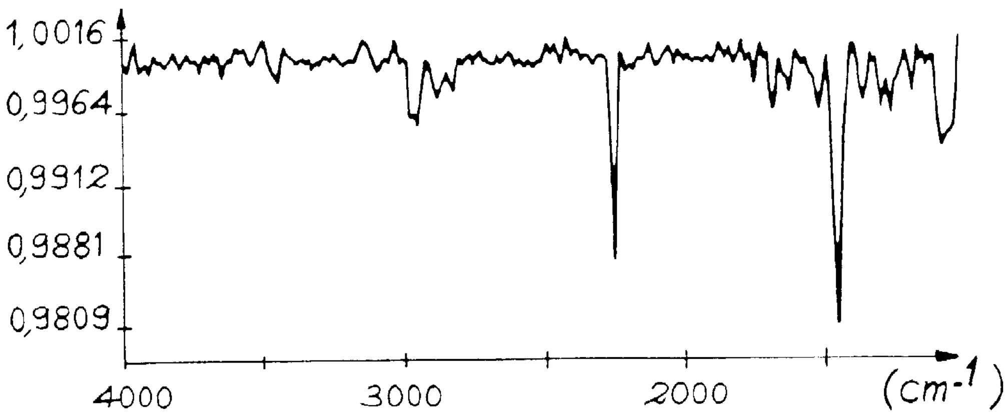


FIG. 2

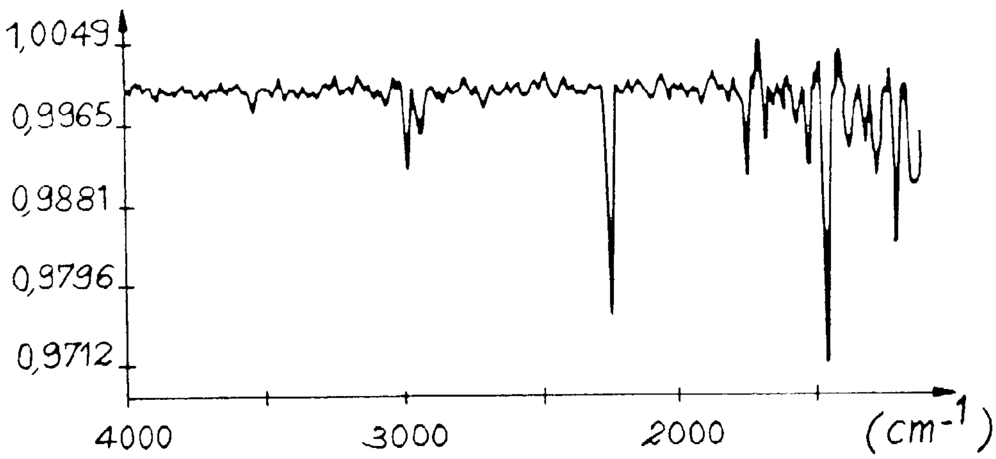


FIG. 3

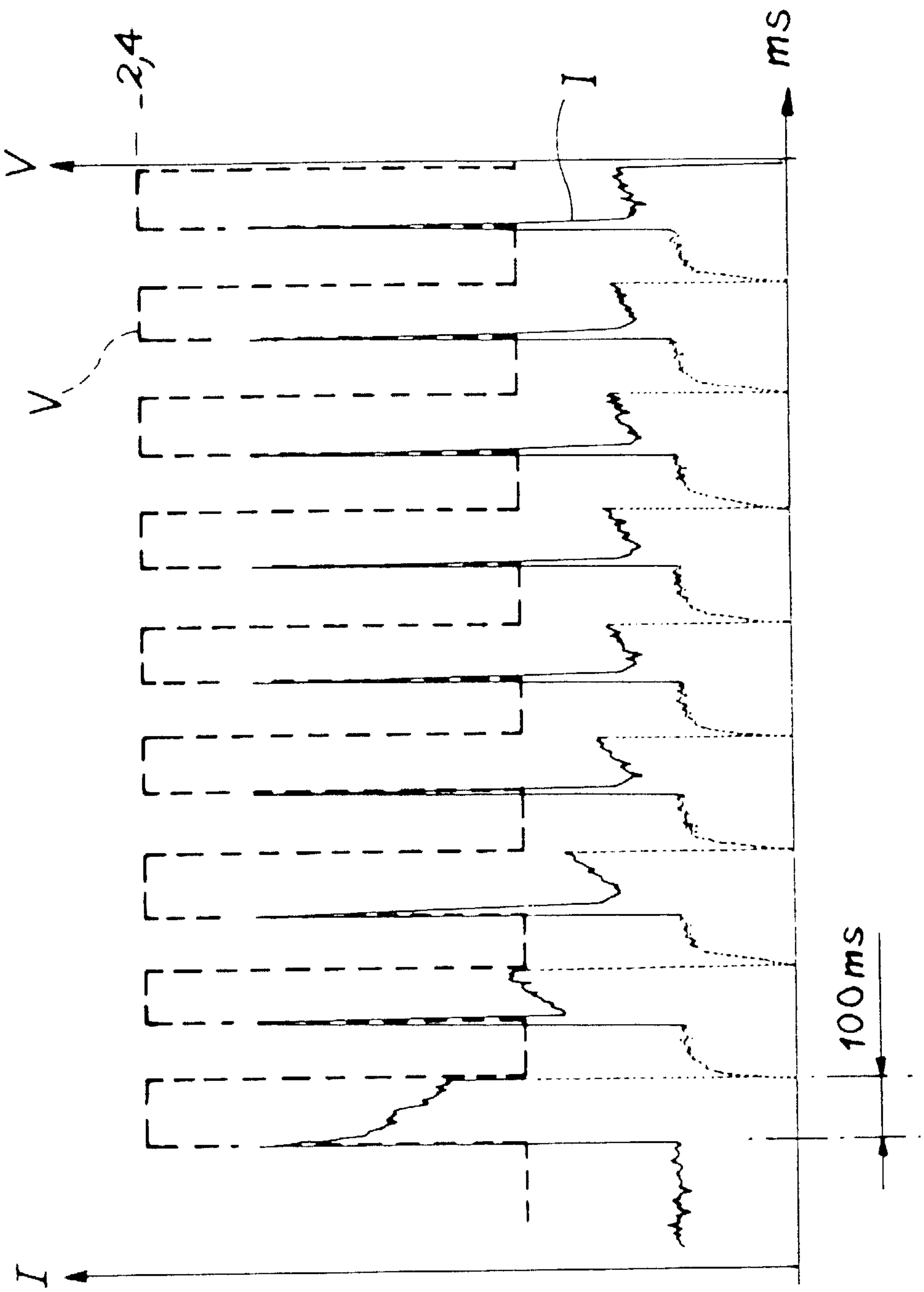


FIG. 4

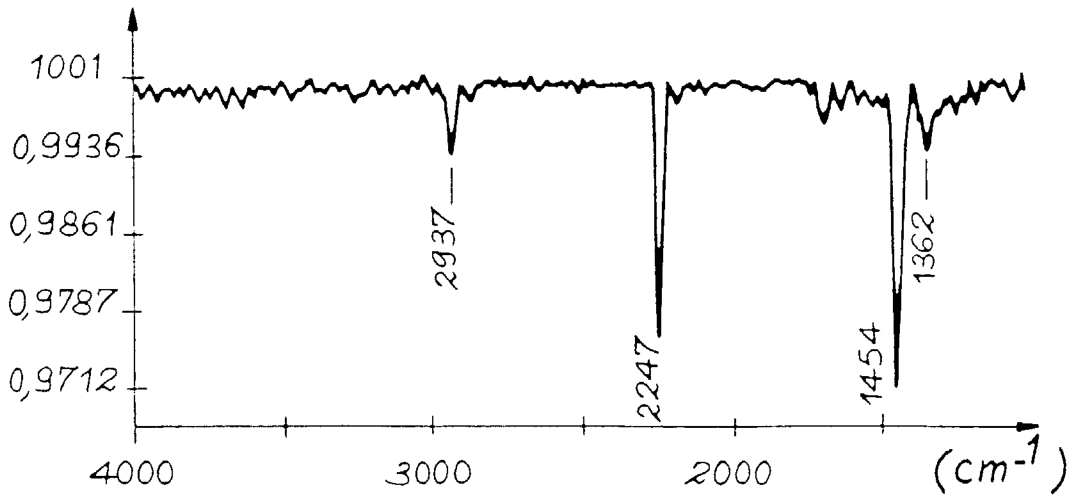
1001
0,9936
0,9861
0,9787
0,9712
2937
2247
1454
1362
4000
3000
2000
(cm-1)

FIG. 5

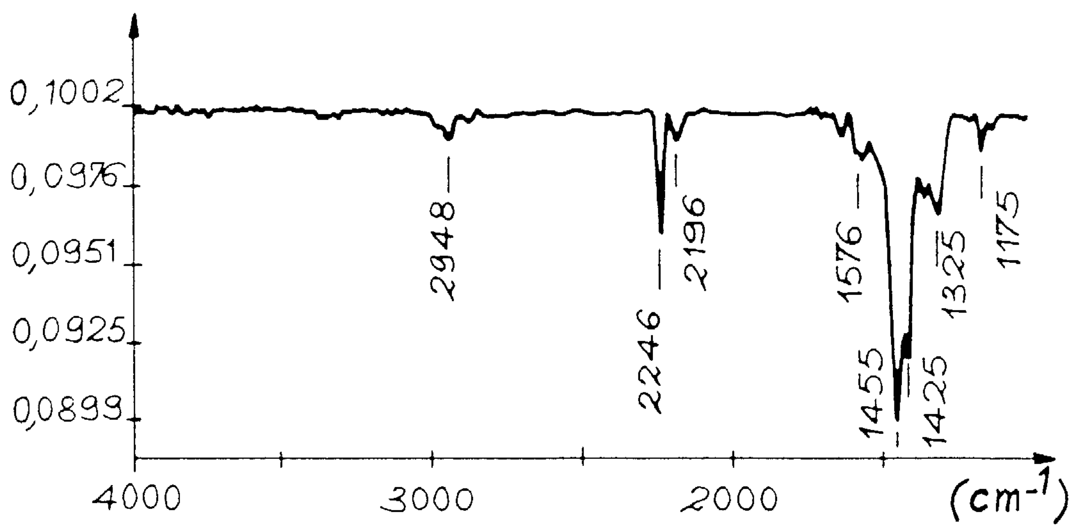
0,1002
0,0976
0,0951
0,0925
0,0899
2948
2246
2196
1576
1455
1425
1325
1175
4000
3000
2000
(cm-1)

FIG. 6

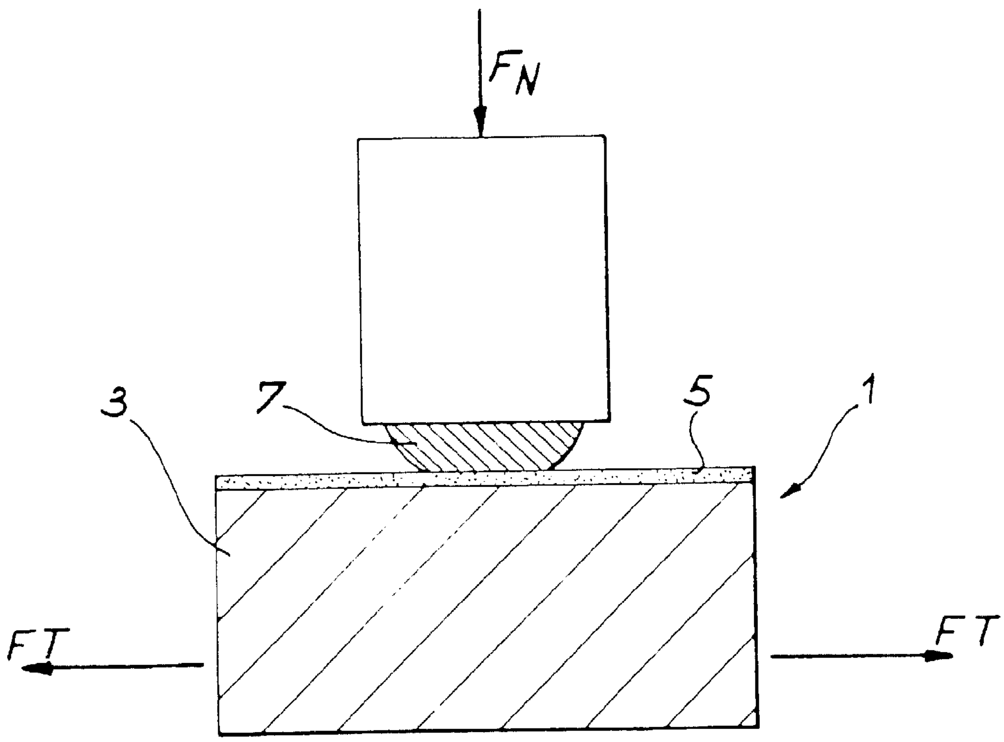


FIG. 7

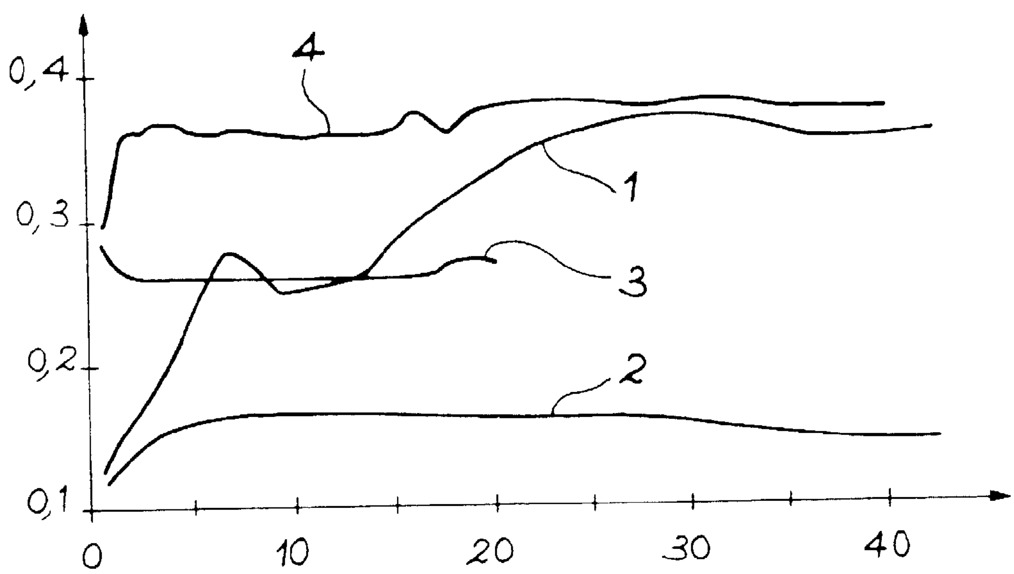


FIG. 8

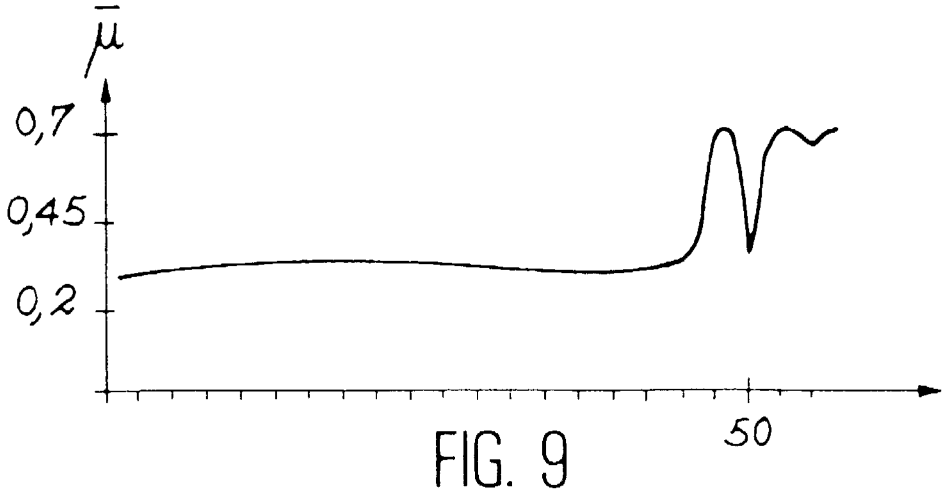


FIG. 9

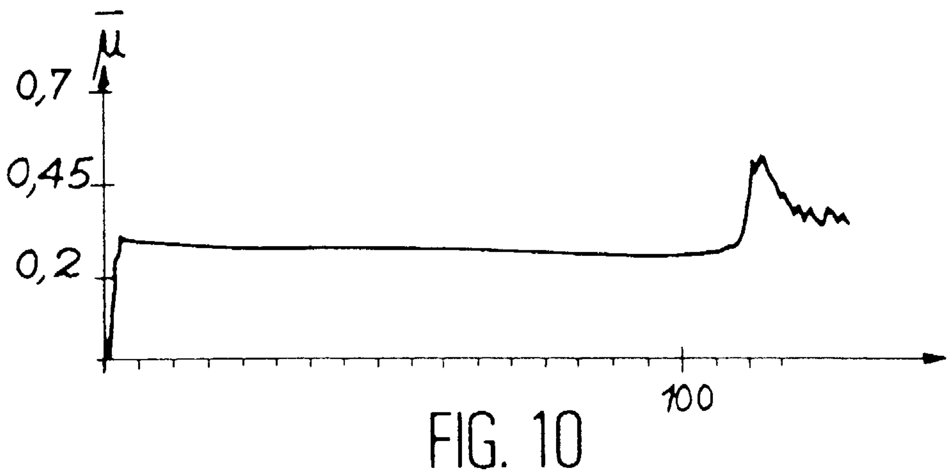


FIG. 10

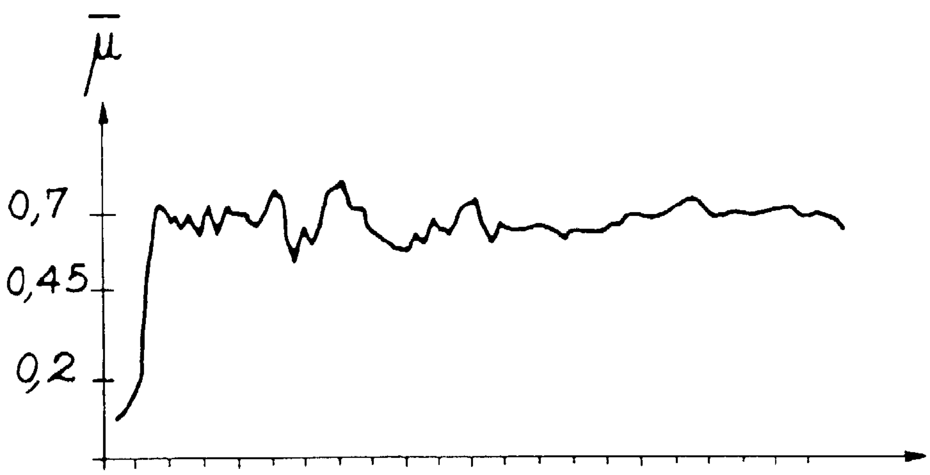


FIG. 11

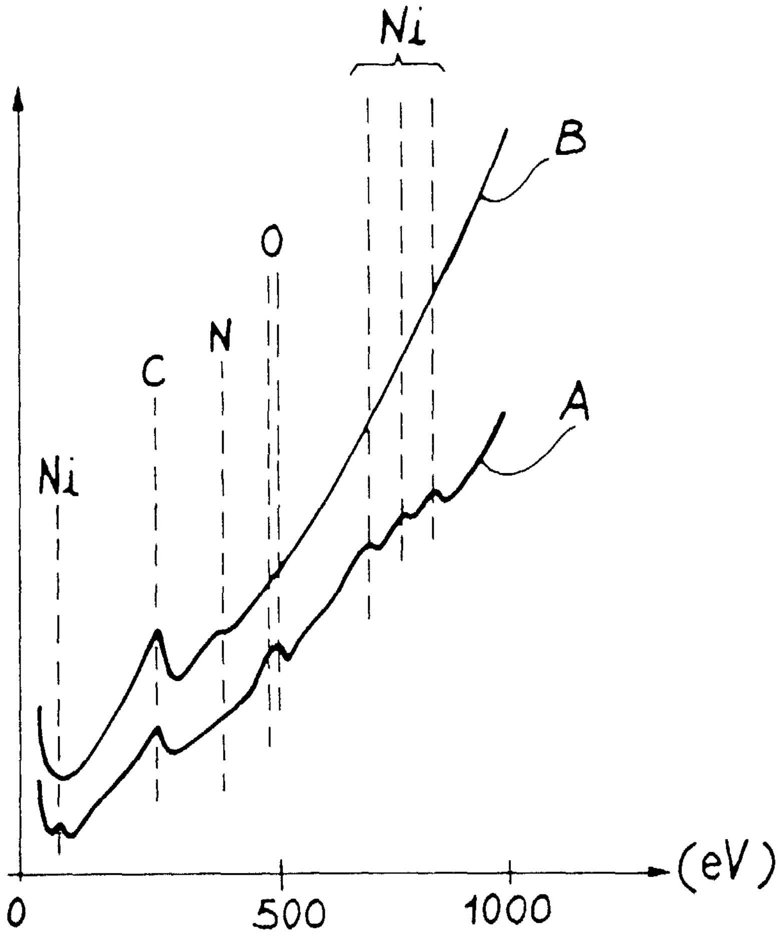


FIG. 12